(19) Europäisches Patentamt / European Patent Office / Office européen des brevets

(11) **EP 2 032 942 B1**

(12) **FASCICULE DE BREVET EUROPEEN**

(45) Date de publication et mention
de la délivrance du brevet:
**04.09.2013 Bulletin 2013/36**

(21) Numéro de dépôt: **07765580.1**

(22) Date de dépôt: **22.06.2007**

(51) Int Cl.:
*G01C 19/56* (2012.01)     *G01C 21/16* (2006.01)
*G05D 19/02* (2006.01)

(86) Numéro de dépôt international:
**PCT/EP2007/056271**

(87) Numéro de publication internationale:
**WO 2007/147896 (27.12.2007 Gazette 2007/52)**

(54) **UNITE DE MESURE INERTIELLE A TENUE RENFORCEE AUX ACCELERATIONS**

TRÄGHEITSMESSEINHEIT MIT VERBESSERTER BESCHLEUNIGUNGSFESTIGKEIT

INERTIAL MEASUREMENT UNIT WITH ENHANCED ACCELERATION WITHSTAND CAPABILITY

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **23.06.2006 FR 0605665**

(43) Date de publication de la demande:
**11.03.2009 Bulletin 2009/11**

(73) Titulaire: **THALES**
**92200 Neuilly sur Seine (FR)**

(72) Inventeur: **MILLET, Hervé**
**F-86360 Montamise (FR)**

(74) Mandataire: **Esselin, Sophie et al**
**Marks & Clerk France**
**Conseils en Propriété Industrielle**
**Immeuble Visium**
**22, Avenue Aristide Briand**
**94117 Arcueil Cedex (FR)**

(56) Documents cités:
**US-A- 4 590 801     US-A- 5 225 838**
**US-A- 5 734 246**

• **PARK S ET AL: "A scheme for improving the performance of a gyroscope-free inertial measurement unit" SENSORS AND ACTUATORS A, ELSEVIER SEQUOIA S.A., LAUSANNE, CH, vol. 121, no. 2, 30 juin 2005 (2005-06-30), pages 410-420, XP004913707 ISSN: 0924-4247**

**Description**

La présente invention se rapporte à une unité de mesure inertielle à tenue renforcée aux accélérations.

Les accéléromètres équipant des engins volants sont utilisés pour en élaborer les paramètres d'attitude. Toutefois, lorsque ces engins sont en particulier des hélicoptères, ces accéléromètres sont soumis à de fortes accélérations générées par les vibrations de ces hélicoptères, qui viennent se superposer à l'accélération propre du porteur. Une spécification typique de vibrations présente, par exemple, un niveau de bruit blanc de 0.02 $g^2$/Hz entre 10 et 300Hz auquel s'ajoutent des raies sinus d'amplitude allant jusqu'à 2.5g à basse fréquence.

Par ailleurs, une nouvelle génération de capteurs accéléromètriques, à base de technologie MEMS (Micro Electro Mechanical Systems) voit actuellement le jour. Ces capteurs, initialement destinés principalement à l'automobile, présentent des performances compatibles avec les systèmes d'attitude bas coût pour aéronef, tels que les systèmes dits « Attitude and Heading Reference System » (AHRS) ou les horizons de secours. Cependant, leur domaine de mesure est en général limité (typiquement : 1 à 3 g)

L'utilisation de tels accéléromètres dans le cas des hélicoptères pose deux problèmes :

1° -La saturation dans le cas d'accéléromètres tels que, par exemple, le VTISCA 61T, le domaine de performance nominale se situe à 2g, et le seuil de saturation se situe à 2.7g. La bande passante du capteur est inférieure à 80 Hz.

La valeur efficace du bruit blanc vu à travers la fonction de transfert de l'accéléromètre est de 1.3 g. En assimilant la valeur crête à la valeur à $3\sigma$, le bruit blanc à lui seul peut générer en crête 3.9 g. A ce bruit blanc s'ajoute également une des raies sinus mentionnées précédemment qui sont toutes dans la bande passante de l'accéléromètre. Le risque de saturation est donc très élevé.

Il est difficile d'évaluer l'impact de la saturation des accéléromètres sur la performance d'attitude, car celle-ci dépend de la symétrie de la saturation. Il n'est cependant pas acceptable d'avoir des saturations en fonctionnement nominal.

2° - La rectification. Les coefficients typiques de rectification des accéléromètres du type envisagé sont de 5 mg/$g^2$. Avec une valeur efficace de 1.3 g, on génère un biais de l'ordre de 8.5 mg. Lorsque l'on prend en compte les raies sinus, l'erreur globale d'attitude obtenue est supérieure à 2°. La spécification d'attitude d'une AHRS étant typiquement de 1° (à 95%), ces valeurs ne sont pas acceptables.

Les sorties de l'AHRS peuvent également être utilisées pour le pilotage de l'aeronef. Dans ce cas, une valeur typique de spécification est: 10 mg (95 %) Cette spécification ne peut pas non plus être respectée.

Parmi les différentes solutions envisageables pour remédier à ces problèmes, on peut citer :

- 1. Utiliser un accéléromètre ayant à la fois un domaine suffisant pour ne pas saturer et un coefficient de rectification faible. C'est la solution actuellement adoptée dans les AHRS. Les accéléromètres ayant à la fois un domaine suffisamment élevé pour éviter la saturation et un coefficient de rectification faible sont de type pendulaire asservi ou VBA (Vibrating Beam Accelerometer). (On peut citer les modèles: Honeywell QA 700, SAGEM ACSIL ). Leur coût est prohibitif pour les applications visées

- 2. Une solution double accéléromètre : un accéléromètre de domaine 2g permettant de conserver la-répétabilité de - biais long terme associé à un accéléromètre grand domaine (typiquement 10 ou 12 g). On résout ainsi le problème de la saturation, mais pas celui de la rectification. En effet, Les accéléromètres 12g bas coût ont une bande passante bien plus élevée (500Hz) et un coefficient de rectification également plus fort.

- 3. Solution à capteurs suspendus. La première raie gênante est typiquement autour de 20 Hz. Il faudrait donc couper le spectre fréquentiel en dessous de cette valeur, ce qui est difficilement concevable, car on tomberait alors sur des amplitudes de débattement très grandes et des problèmes de stabilité de mésalignement. On ne peut pas non plus placer la fréquence de la suspension entre deux raies, car elles sont très rapprochées.

La présente invention a pour objet une unité de mesure inertielle qui, lorsqu'elle est soumise à de fortes vibrations, conserve une précision suffisante, tout en étant d'un prix de revient le plus faible possible.

L'unité de mesure inertielle conforme à l'invention est caractérisée en ce qu'elle comporte au moins cinq accéléromètres dont les axes sensibles sont disposés suivant différentes positions de la génératrice d'une surface au moins sensiblement conique et de façon que trois quelconques d'entre eux ne soient pas dans le même plan et en ce qu'elle comporte un dispositif de détection de saturation des accéléromètres et un dispositif de détection de biais anormaux.

Selon une caractéristique avantageuse de l'invention, les axes sensibles des accéléromètres sont répartis de façon dissymétrique par rapport aux axes de référence de l'unité de mesure inertielle.

La présente invention sera mieux comprise à la lecture de la description détaillée d'un mode de réalisation, pris à titre d'exemple non limitatif et illustré par le dessin annexé, sur lequel :

- la figure 1, mentionnée ci-dessus, est un diagramme montrant l'évolution du niveau de vibrations en fonction de la fréquence dans

- une spécification typique pour hélicoptère,

- la figure 2 est un diagramme simplifié montrant un exemple de disposition des axes sensibles des accéléromètres d'une UMI conforme à la présente invention, et

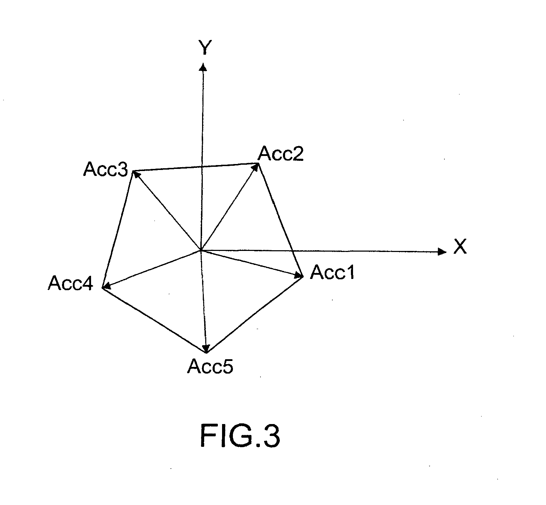

- la figure 3 est une vue de dessus simplifiée montrant un exemple de répartition des axes sensibles des accéléromètres d'une UMI conforme à la présente invention.

La solution de l'invention est de conserver les accéléromètres de type 2g (saturation à 2.7g) de façon à profiter de leurs bonnes performances de stabilité de biais à long terme et de leur coût faible.

Le trièdre classique de trois accéléromètres est remplacé par une configuration à n accéléromètres (n>4) dont les axes sensibles sont disposés suivant différentes positions de la génératrice d'une surface qui est, de préférence, un cône de demi-angle au sommet α. La valeur de l'angle α sera déterminée en fonction de l'accélération maximale que l'on souhaite mesurer suivant l'axe vertical Z.

$$\alpha = Arc\cos(sat\,/\,accZ)$$

sat : valeur du seuil de saturation de l'accéléromètre
accZ : accélération maximale suivant Z
Par exemple, pour un seuil de saturation à 2,7g et une accélération maximale de 7 g, l'angle α sera réglé à 67°.

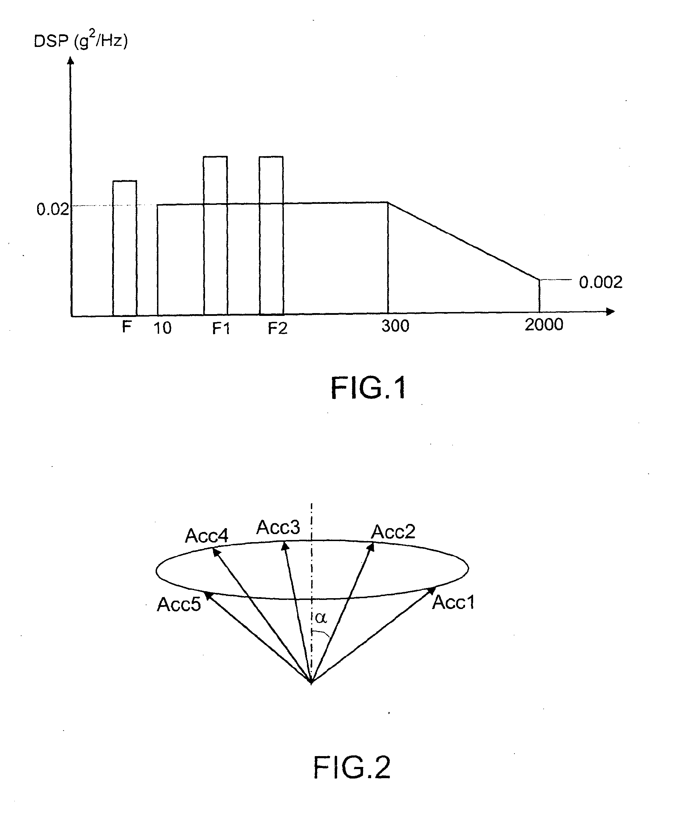

On a schématiquement représenté en figure 2 un exemple d'une telle disposition pour le cas de cinq accéléromètres. Sur cette figure, les axes accélérométriques sont représentés concourants, mais il est bien entendu qu'ils ne sont pas nécessairement concourants.

Dans la suite de cette description, on considérera le nombre minimum d'accéléromètres pour cette solution, qui est de cinq. Il est possible d'optimiser le nombre de capteurs, sachant qu'un nombre plus important améliorera les performances au détriment du coût.

Le dispositif de l'invention part de la constatation que les vibrations ne sont pas présentes simultanément sur tous les axes. Par conséquent :

• tous les accéléromètres ne saturent pas simultanément,

• tous les accéléromètres n'ont pas simultanément un niveau de rectification élevé.

Cette hypothèse a été vérifiée en essais de qualification, où les vibrations sont effectuées axe par axe, mais elle est généralement vraie sur avion ou hélicoptère, où les vibrations sont transmises par les structures dans des directions privilégiées.

Dans un premier temps, on détecte les accéléromètres qui sont saturés. Cette détection peut se faire de façon très simple en comparant la mesure délivrée avec un seuil situé légèrement en dessous du seuil de saturation. Le ou les accéléromètres qui sont saturés ne sont pas pris en compte par la suite. On élimine ainsi au maximum n-3 accéléromètres de façon à conserver un nombre de mesures suffisant pour le calcul de l'attitude. Si plus de n-3 accéléromètres sont saturés, on n'en éliminera aucun. L'AHRS continuera à fonctionner, mais en mode dégradé.

Dans un second temps, on identifiera le ou les accéléromètres qui présentent un biais anormal. Ce biais anormal peut être en particulier généré par un effet de rectification.

L'algorithme utilisé pour cette identification est un algorithme de détection de défauts tel que celui utilisant la méthode du vecteur de parité décrit dans « Radix : Systèmes inertiels à composants liés », Capduès Editions. D'autres algorithmes peuvent également être utilisés.

Le vecteur mesuré est le vecteur accélération non gravitationnelle totale du porteur. En présence de vibrations, l'accéléromètre dont l'axe sensible est le plus proche de l'axe de vibration présente une erreur de rectification plus importante que les autres. L'algorithme permet de l'éliminer et de ne conserver que les accéléromètres présentant un niveau de rectification plus faible.

Dans le cas de vibrations suivant l'axe vertical Z, qui peut se présenter en phase de qualification, tous les accéléromètres voient le même niveau de vibrations. S'ils ont des coefficients de rectification voisins, ils présenteront des erreurs voisines et il ne sera pas possible d'en éliminer. Par contre, le niveau vu par chaque accéléromètre est pondéré par cosα. Par exemple, pour une valeur de α de 60°, on divise donc le niveau d'accélération vu par chaque accéléromètre par 2. L'erreur d'attitude obtenue devient alors acceptable.

Le pire cas dépend du nombre d'accéléromètres retenu.

Pour une configuration à cinq accéléromètres, ce pire cas est celui où les vibrations sont vues avec le même niveau par deux accéléromètres. Dans ce cas, on élimine un seulement ou aucun de ces deux accéléromètres. Cependant, le niveau vu par ces deux accéléromètres est divisé par 0.707, et on dispose par ailleurs de trois accéléromètres qui ne voient pas les vibrations. La performance est donc faiblement dégradée.

**Revendications**

1. Unité de mesure inertielle à tenue renforcée aux accélérations, **caractérisée en ce qu'**elle comporte au moins cinq accéléromètres (Acc1 à Acc5) dont les axes sensibles sont disposés suivant différentes positions de la génératrice d'une surface au moins sensiblement conique et de façon que trois quelconques d'entre eux ne soient pas dans le même plan et **en ce qu'**elle comporte un dispositif de détection de saturation des accéléromètres et un dispositif de détection de biais anormaux.

**2.** Unité de mesure inertielle selon les revendications 1 ou 2, **caractérisée en ce que** les axes sensibles des accéléromètres sont répartis de façon dissymétrique par rapport aux axes de référence de l'unité de mesure inertielle.

**3.** Unité de mesure inertielle selon l'une des revendications précédentes, **caractérisée en ce que** les axes sensibles des accéléromètres sont concourants en un point unique.

## Patentansprüche

**1.** Trägheitsmesseinheit mit verbesserter Beschleunigungsfestigkeit, **dadurch gekennzeichnet, dass** sie wenigstens fünf Beschleunigungsmesser (Acc1 bis Acc5) umfasst, deren empfindliche Achsen an verschiedenen Positionen der Erzeugenden einer Oberfläche angeordnet sind, die wenigstens im Wesentlichen konisch ist, und so, dass beliebige drei davon nicht in derselben Ebene sind, und dadurch, dass sie eine Vorrichtung zum Erkennen von Sättigung der Beschleunigungsmesser und eine Vorrichtung zum Erkennen von anormalen Schrägungen umfasst.

**2.** Trägheitsmesseinheit nach Anspruch 1, **dadurch gekennzeichnet, dass** die empfindlichen Achsen der Beschleunigungsmesser auf asymmetrische Weise in Bezug auf die Referenzachsen der Trägheitsmesseinheit verteilt sind.

**3.** Trägheitsmesseinheit nach einem der vorherigen Ansprüche, **dadurch gekennzeichnet, dass** die empfindlichen Achsen der Beschleunigungsmesser in einem einzigen Punkt zusammenlaufen.

## Claims

**1.** An inertial measurement unit with enhanced resistance to accelerations, **characterised in that** it comprises at least five accelerometers (Acc1 to Acc5), the sensitive axes of which are disposed by various positions of the generatrix of a surface that is at least substantially conical and so that any three of said accelerometers are not in the same plane, and **in that** it comprises a device for detecting saturation of the accelerometers and a device for detecting abnormal biases.

**2.** The inertial measurement unit according to claim 1, **characterised in that** the sensitive axes of the accelerometers are distributed in an asymmetrical manner relative to the reference axes of said inertial measurement unit.

**3.** The inertial measurement unit according to any one of the preceding claims, **characterised in that** the sensitive axes of the accelerometers merge at a single point.

FIG.1

FIG.2

FIG.3